# EUROPÄISCHE PATENTSCHRIFT

(11) **EP 3 513 104 B1**
(45) Veröffentlichungstag und Bekanntmachung des Hinweises auf die Patenterteilung: **27.10.2021**
(21) Anmeldenummer: 17778165.5
(22) Anmeldetag: 12.09.2017
(51) Int. Cl.: F16K 5/02, F16K 5/16

(54) **ZERLEGBARER HAHN MIT FEDERELEMENT ZUM BEFESTIGEN UND VORSPANNEN**
DETACHABLE TAP HAVING A SPRING ELEMENT FOR FASTENING AND PRESTRESSING
ROBINET DÉMONTABLE AVEC ÉLÉMENT RESSORT POUR FIXATION ET PRÉCONTRAINTE

(30) Priorität: 15.09.2016 DE 102016011184
(43) Veröffentlichungstag der Anmeldung: 24.07.2019
(73) Patentinhaber: OLYMPUS Winter & Ibe GmbH, 22045 Hamburg (DE)
(72) Erfinder: MIERSCH, Hannes, 22149 Hamburg (DE)
(74) Vertreter: Kehl, Ascherl, Liebhoff & Ettmayr Patentanwälte Partnerschaft mbB
(86) Internationale Anmeldenummer: PCT/DE2017/000295
(87) Internationale Veröffentlichungsnummer: WO 2018/050140

(56) Entgegenhaltungen:
- EP-A2- 0 863 340
- DE-U- 1 871 833
- FR-A- 1 195 190
- GB-A- 466 425
- US-A- 2 150 198
- US-A- 2 708 562
- US-A- 3 195 856

## Beschreibung

Die vorliegende Erfindung bezieht sich auf einen Hahn zum Erzeugen einer Fluidverbindung zwischen mindestens zwei Anschlussteilen und zum Trennen der Fluidverbindung gemäß dem Oberbegriff von Anspruch 1. Der Hahn ist dabei bevorzugt zerlegbar bzw. demontierbar ausgestaltet.

Hähne zum Erzeugen einer Fluidverbindung sind im Stand der Technik bekannt. Die Druckschrift EP0863340A2 offenbart beispielsweise einen Hahn mit einem Gehäuse und einem im Gehäuse drehbaren Küken, das in seiner Arbeitsposition mit Dichtflächen gegen Dichtflächen des Gehäuses anliegt und unter Aufhebung seiner lösbaren Verbindung mit dem Gehäuse aus der Arbeitsposition in eine Zwischenposition (b) bringbar ist, bei der sich die Dichtflächen außer Anlage befinden und das Gehäuse sowie das Küken verbunden bleiben. Das Küken ist dabei in seiner Arbeitsposition mit dem Gehäuse form- und kraftschlüssig verrastet und unter Überwindung dieser Verrastung in die Zwischenposition bewegbar.

Besonders im biologischen und medizinischen Bereich muss darauf geachtet werden, dass ein vielseitig einsetzbarer Hahn zum Reinigen durch Spülen und zur Desinfektion leicht demontierbar ist, wobei die Montage und Demontage des Hahns möglich und einfach sein soll. Ferner soll ein derartiger Hahn bevorzugt mit geringem Kostenaufwand herstellbar sein.

Die Druckschriften GB466425A, US3195856A, DE1871833U, US2708562A, US2150198A, EP0863340A2 und FR1195190A beschreiben unterschiedliche Ausführungen von Hähnen, wobei keine dieser Druckschriften eine Feder aufweist, welche zwei Positionieranteile und drei Halteanteile aufweist.

Es ist somit die Aufgabe der vorliegenden Erfindung einen bevorzugt demontierbaren Hahn zu schaffen, der einfach montiert und demontiert werden kann und dabei kostengünstig ist.

Die zuvor genannte Aufgabe wird erfindungsgemäß durch einen Hahn gemäß Anspruch 1 gelöst. Der Hahn gemäß Anspruch 1 umfasst bevorzugt mindestens ein Verbindungs- und Trennelement zum Erzeugen der Fluidverbindung und zum Trennen der Fluidverbindung, ein Handbetätigungselement zum Rotieren des Verbindungs- und Trennelements und einen Hauptkörper. Das Verbindungs- und Trennelement ist dabei zumindest abschnittsweise kegelförmig ausgebildet und weist mindestens eine Durchgangsöffnung zum Erzeugen der Fluidverbindung auf, wobei das Handbetätigungselement und das Verbindungs- und Trennelement mechanisch gekoppelt sind. Bevorzugt sind das Handbetätigungselement und das Verbindungs- und Trennelement Elemente einer Einrichtung und somit stets miteinander verbunden.

Der Hauptkörper weist mindestens ein Anschlussteil und bevorzugt mehrere oder alle Anschlussteile und einen Innenraum zum Aufnehmen des Verbindungs- und Trennelements auf, wobei der Innenraum eine Kontaktoberfläche zum in Kontakt bringen mit dem Verbindungs- und Trennelement aufweist, wobei die Kontaktoberfläche zumindest abschnittsweise negativ zum kegelförmigen Oberflächenanteil des Verbindungs- und Trennelement ausgebildet ist. Erfindungsgemäß ist mindestens ein Federelement zum formschlüssigen Fixieren der Position des Verbindungs- und Trennelements gegenüber dem Hauptkörper und/oder vorzugsweise zum Erzeugen einer Flächenpressung und/oder zum Fixieren der Kontaktflächen zwischen der Kontaktoberfläche und dem kegelförmigen Oberflächenanteil des Verbindungs- und Trennelements vorgesehen. Das Federelement ist dabei bevorzugt im oder am Hauptkörper angeordnet. Ferner kann das Verbindungs- und Trennelement zum Demontieren oder Montieren gegenüber dem Federelement in seiner axialen Erstreckungsrichtung bewegbar sein.

Diese Lösung ist vorteilhaft, da eine einfache und somit günstige Anordnung bereitgestellt wird, bei der das Federelement eine Positionierung und Sicherung des Verbindungs- und Trennelements gegenüber dem Hauptkörper bewirkt. Hieraus resultiert eine gute Montierbarkeit und Demontierbarkeit.

Weitere Ausführungsformen sind Gegenstand der Unteransprüche und der nachfolgenden Beschreibungsteile.

Weiterhin weist das Verbindungs- und Trennelement in seiner axialen Erstreckungsrichtung anschließend an den Kegelabschnitt mit dem kleinsten Durchmesser einen Fortsatz auf, wobei der Fortsatz eine Wandung aufweist, wobei die Wandung umlaufend sein kann und vorzugsweise gegenüber der axialen Erstreckungsrichtung geneigt ist, wobei das mindestens eine Federelement die Wandung zum Erzeugen einer Zugkraft in dem Verbindungs- und Trennelement bevorzugt zum Erzeugen der Flächenpressung zwischen der Kontaktoberfläche und dem kegelförmigen Oberflächenanteil des Verbindungs- und Trennelements, kontaktiert. Diese Ausführungsform ist vorteilhaft, da insbesondere durch das Zusammenwirken der geneigten Wandung mit dem Federelement oder mit dem Fixiermittel eine Dichtwirkung zwischen dem Verbindungs- und Trennelement und dem Hauptkörper erzeugt wird. Die Dichtwirkung kann hierbei z.B. durch unterschiedliche starke Federkräfte beeinflusst werden. Die bevorzugt umlaufende Wandung, die gegenüber der Erstreckungsrichtung geneigt ist, ist vorzugsweise derart geneigt, dass die kegelförmige Oberfläche und die geneigte Wandung in einem Winkel von weniger als 180°, insbesondere von weniger als 178° oder von weniger als 175° oder von weniger als 170° oder von weniger als 165°, zueinander ausgerichtet sind. Zusätzlich oder alternativ kann jedoch ein Dichtmittel, wie z.B. ein O-Ring, zum Abdichten des Verbindungs- und Trennelements gegenüber dem Hauptkörper vorgesehen sein. Bevorzugt sind mehrere, insbesondere genau zwei, Dichtmittel zum Abdichten des Verbindungs- und Trennelements gegenüber dem Hauptkörper vorgesehen.

Das Federelement weist mindestens zwei längliche Anteile auf, wobei die zwei länglichen Anteile durch einen gebogenen Anteil miteinander verbunden sind, wobei die zwei länglichen Anteile als zwei längliche, insbesondere gerade, Positionieranteile ausgebildet sind und die bevorzugt geneigte umlaufende Wandung zum Erzeugen einer Zugkraft in dem Verbindungs- und Trennelement bevorzugt zum Erzeugen der Flächenpressung zwischen der Kontaktoberfläche und dem kegelförmigen Oberflächenanteil des Verbindungs- und Trennelements kontaktieren. Diese Ausführungsform ist vorteilhaft, da das Federelement einfach hergestellt werden kann und die Positionieranteile zur Montage oder Demontage auseinander gedrückt werden können. Zudem sichert die Feder bzw. das Federelement auch die Lage des Verbindungs- und Trennelements, indem zunächst die Federkraft bei der Demontage überwunden werden muss.

Das Federelement weist gemäß einer weiteren bevorzugten Ausführungsform der vorliegenden Erfindung zusätzlich mindestens zwei längliche, insbesondere gerade, Halteanteile auf, wobei die länglichen Halteanteile die Enden des Federelements bilden und form- oder reibschlüssig mit dem Hauptkörper gekoppelt sind und wobei jeder Positionieranteil über einen gebogenen Anteil mit einem Halteanteil verbunden ist. Das Federelement bildet dabei bevorzugt eine M-förmige Gestalt aus, wobei der Umschlingungswinkel des Radius des die beiden Positionieranteile verbindenden gebogenen Anteils kleiner ist als der Umschlingungswinkel des Radius eines gebogenen Anteils, der einen Halteanteil mit einem Positionieranteil verbindet. Der Radius des die beiden Positionieranteile verbindenden gebogenen Anteils ist bevorzugt um mindestens 1 mm oder um mindestens 2 mm oder um mindestens 3 mm größer als der Radius eines gebogenen Anteils, der einen Halteanteil mit einem Positionieranteil verbindet. Diese Ausführungsform ist vorteilhaft, da die Positionieranteile sicher mit dem Verbindungs- und Trennelement in Kontakt bringbar sind und die Federkrafterzeugung und/oder Fixierung des Federelements am Hauptkörper mittels der Halteanteile und/oder der weiteren gebogenen Anteile bewirkt wird. Diese Ausführungsform ist ferner vorteilhaft, da die Halteanteile deutliche Bereiche zum Anliegen am Hauptkörper ausbilden und die über das Verbindungs- und Trennelement bei einer Rotation des Verbindungs- und Trennelements auf die Feder übertragenen Kräfte daher sicher auf den Hauptkörper übertragen werden.

Der gebogene Anteil weist gemäß einer weiteren bevorzugten Ausführungsform der vorliegenden Erfindung Abschnitte mit unterschiedlichen Radien auf, wobei ein Hauptabschnitt einen Radius aufweist der größer ist als die Radien zweier Nebenabschnitte, wobei die Positionieranteile über die Nebenabschnitte mit dem Hauptabschnitt verbunden sind. Diese Ausführungsform ist vorteilhaft, da das Federelement günstig herstellbar ist und die zur Erzeugung der erforderlichen Anpresskraft zwischen dem Verbindungs- und Trennelement und dem Hauptkörper erforderliche Federkraft aufgrund der deutlich gebogenen Abschnitte (Nebenabschnitte und Hauptabschnitt) sicher bereitgestellt wird. Bevorzugt handelt es sich bei allen hierin benannten Federelementen stets um Federelemente aus Metall, Kunststoff oder einem Verbundwerkstoff.

Das Federelement weist zusätzlich mindestens drei längliche Halteanteile auf, wobei die Positionieranteile die Enden des Federelements bilden, wobei jeder Positionieranteil über einen gebogenen Anteil mit einem Halteanteil verbunden ist, wobei ein zentraler länglicher Halteanteil mittels zweier gebogener Anteile beiderseits mit jeweils einem der weiteren Halteanteile verbunden ist, wobei die Halteanteile form- oder reibschlüssig mit dem Hauptkörper gekoppelt sind. Bevorzugt sind die jeweils über einen gebogenen Anteil miteinander verbundenen Halteanteile in einem Winkel zwischen 70° und 110°, insbesondere in einem Winkel von 90°, zueinander ausgerichtet. Diese Ausführungsform ist vorteilhaft, da durch die drei länglichen, insbesondere geraden, Halteanteile, noch mehr Anlagemöglichkeiten zum Übertragen von Kräften bereitstehen. Somit dichtet der kegelförmige Anlagebereich zwischen dem Verbindungs- und Trennelement und dem Hauptkörper auch bei einer Griffdrehung, bei welcher der Nutzer am Griff zieht.

Gemäß einer weiteren bevorzugten Ausführungsform der vorliegenden Erfindung sind zwei Federelemente, insbesondere mindestens oder genau oder maximal zwei Federelemente vorgesehen. Zusätzlich ist denkbar, dass jedes Federelement einen länglichen, insbesondere geraden, Halteanteil und einen länglichen, insbesondere geraden, Positionieranteil aufweist, wobei der Halteanteil und der Positionieranteil jeweils mittels eines gebogenen Anteils miteinander verbunden sind. Die Positionieranteile kontaktieren dabei bevorzugt abschnittsweise die bevorzugt zumindest abschnittsweise geneigte und bevorzugt zumindest abschnittsweise oder vollständig umlaufende Wandung zum Erzeugen einer Zugkraft in dem Verbindungs- und Trennelement bevorzugt zum Erzeugen der Flächenpressung zwischen der Kontaktoberfläche und dem kegelförmigen Oberflächenanteil des Verbindungs- und Trennelements. Die länglichen Halteanteile sind dabei form- oder reibschlüssig mit dem Hauptkörper gekoppelt, wobei die Positionieranteile jeweils mit einem zum gebogenen Anteil beabstandeten Ende formschlüssig mit dem Hauptkörper zusammenwirken und wobei sich an die Halteanteile jeweils ein Zapfenanteil anschließt, der sich orthogonal zu einer Ebene erstreckt, die durch die Positionieranteile und Halteanteile aufgespannt wird, wobei jeder Zapfenanteil jeweils in einer Bohrung oder Ausnehmung im Hauptkörper eingesteckt ist. Diese Ausführungsform ist vorteilhaft, da die Federelemente und die zum Halten der Federelemente ausgebildeten Halteelemente mit gegenüber anderen Bauformen sehr schlank bzw. klein gebaut werden können, wodurch sich Material- und Gewichtseinsparungen ergeben.

Der Hauptkörper weist gemäß einer weiteren bevorzugten Ausführungsform der vorliegenden Erfindung eine Federführung zum Aufnehmen des Federelements auf, wobei das Federelement einen gebogenen Abschnitt aufweist, mit dem es mit der Federführung gekoppelt ist, wobei der gebogene Abschnitt ein Teil eines gebogenen Anteils ist, der den Hauptkörper in Umfangsrichtung zumindest mehrheitlich und bevorzugt zu mehr als 270° umschließt, wobei der gebogene Abschnitt einerseits ein Sicherungsteil ausbildet, das mit dem Hauptkörper oder dem Fixiermittel gekoppelt ist und sich andererseits an den gebogenen Anteil ein weiterer gebogener Anteil anschließt, wobei der weitere gebogene Anteil und der gebogene Anteil durch einen länglichen, insbesondere geraden, Anteil voneinander beabstandet sind und wobei der weitere gebogene Anteil und der gerade Anteil durch den gebogenen Anteil zumindest mehrheitlich umschlossen werden. Diese Ausführungsform ist vorteilhaft, da mittels des Federelements eine sehr präzise Erzeugung der auf das Verbindungs- und Trennelement wirkenden Anpresskraft erzeugbar ist. Ferner kann das Federelement auf sehr einfache Weise an dem Hauptkörper angeordnet werden.

Das Federelement bildet gemäß einer weiteren bevorzugten Ausführungsform der vorliegenden Erfindung einen sich länglich, insbesondere gerade, erstreckenden Sicherungsteil aus, der zum Einbringen in eine dafür vorgesehene Ausnehmung oder einen dafür vorgesehenen Aufnahmebereich des Hauptkörpers gestaltet ist, wobei sich an den Sicherungsteil ein Kraftübertragungsteil anschließt, wobei mittels dem Kraftübertragungsteil das Fixierelement in Richtung des Verbindungs- und Trennelements mit einer Anpresskraft beaufschlagt wird. Diese Ausführungsform ist vorteilhaft, das Fixierelement sehr präzise zugeführt und ausgestaltet sein kann, insbesondere eine an die bevorzugt geneigte Wandung angepasste Geometrie und/oder aus einem definierten Material bestehen kann oder beschichtet sein kann.

Mehrere Fixiermittel sind gemäß einer weiteren bevorzugten Ausführungsform der vorliegenden Erfindung vorgesehen, wobei die Fixiermittel jeweils über eine im Hauptkörper ausgebildete Führung in radialer Richtung bewegbar sind und durch das Federelement zueinander hingedrückt werden. Diese Ausführungsform ist vorteilhaft, da z.B. von zwei gegenüberliegenden Seiten die Fixierelement sehr präzise zugeführt werden können. Ferner können die Fixierelemente bevorzugt ausgestaltet sein, insbesondere eine an die geneigte Wandung angepasste Geometrie und/oder aus einem definierten Material bestehen oder können beschichtet sein.

Der Hahn ist gemäß einer weiteren bevorzugten Ausführungsform der vorliegenden Erfindung zerstörungsfrei zumindest in die Teile Verbindungs- und Trennelement, Federelement und Hauptkörper zerlegbar. Diese Lösung ist vorteilhaft, da verschlissene Teile leicht ausgetauscht werden können und/oder eine Reinigung und/oder Sterilisation einzelner oder aller Bauteile bewirkt werden kann.

Das Verbindungs- und Trennelement kann konkret als Küken oder Hahnküken ausgeführt sein.

Das Federelement besteht gemäß einer weiteren bevorzugten Ausführungsform aus einem gebogenen Drahtstück.

Gemäß einer weiteren bevorzugten Ausführungsform der vorliegenden Erfindung sind mehrere baugleiche, insbesondere zwei oder drei baugliche, Federelemente vorgesehen.

Mindestens drei baugleiche Federelemente sind gemäß einer weiteren bevorzugten Ausführungsform der vorliegenden Erfindung vorgesehen, wobei jedes Federelement mit einem Ende in einer Ausnehmung um eine Rotationsachses rotierbar gelagert ist und mit einem anderen Ende in Erstreckungsrichtung der Rotationsachse formschlüssig von Halteelementen gehalten wird.

Die Verwendung der Wörter "im Wesentlichen" definiert bevorzugt in allen Fällen, in denen diese Wörter im Rahmen der vorliegenden Erfindung verwendet werden eine Abweichung im Bereich von 1%-30%, insbesondere von 1%-20%, insbesondere von 1%-10%, insbesondere von 1 %-5%, insbesondere von 1%-2%, von der Festlegung, die ohne die Verwendung dieser Wörter gegeben wäre. Einzelne oder alle Darstellungen der im Nachfolgenden beschriebenen Figuren sind bevorzugt als Konstruktionszeichnungen anzusehen, d.h. die sich aus der bzw. den Figuren ergebenden Abmessungen, Proportionen, Funktionszusammenhänge und/oder Anordnungen entsprechen bevorzugt genau oder bevorzugt im Wesentlichen denen der erfindungsgemäßen Vorrichtung bzw. des erfindungsgemäßen Produkts. Weitere Vorteile, Ziele und Eigenschaften vorliegender Erfindung werden anhand nachfolgender Beschreibung anliegender Zeichnungen erläutert, in welchen beispielhaft erfindungsgemäße Vorrichtungen dargestellt sind. Elemente der erfindungsgemäßen Vorrichtungen und Verfahren, welche in den Figuren wenigsten im Wesentlichen hinsichtlich ihrer Funktion übereinstimmen, können hierbei mit gleichen Bezugszeichen gekennzeichnet sein, wobei diese Bauteile bzw. Elemente nicht in allen Figuren beziffert oder erläutert sein müssen. Nachfolgend wird die Erfindung rein beispielhaft anhand der beigefügten Figuren beschrieben.

Darin zeigt:
- Fig. 1: Der Anschauung dienende Darstellung von zwei nicht erfindungsgemäßen Federelementen;

- Fig. 2: mehrere perspektivische Darstellung einer ersten Ausführungsform der vorliegenden Erfindung,
- Fig. 3: Darstellungen von Merkmalen gemäß einer zweiten Ausführungsform der vorliegenden Erfindung,
- Fig. 4: Beispiele für Federelemente, die gemäß der zweiten Ausführungsform eingesetzt werden können,
- Fig. 5 - 8: Der Anschauung dienende Darstellung von nicht erfindungsgemäßen Federelementen bzw. Hähnen

- Fig. 9: eine Draufsicht und eine perspektivische Ansicht einer Ausführungsform, bei der das aus Fig. 4 I. bekannte Federelement eingesetzt wird,
- Fig. 10: -12 Der Anschauung dienende Darstellung von nicht erfindungsgemäßen Federelementen bzw. Hähnen

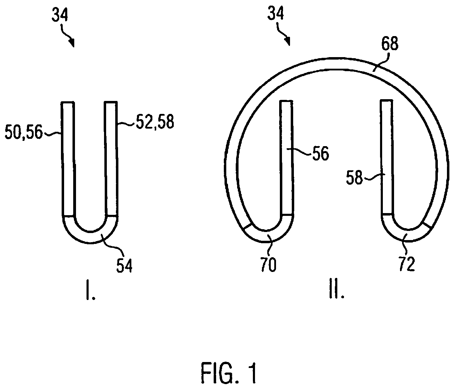

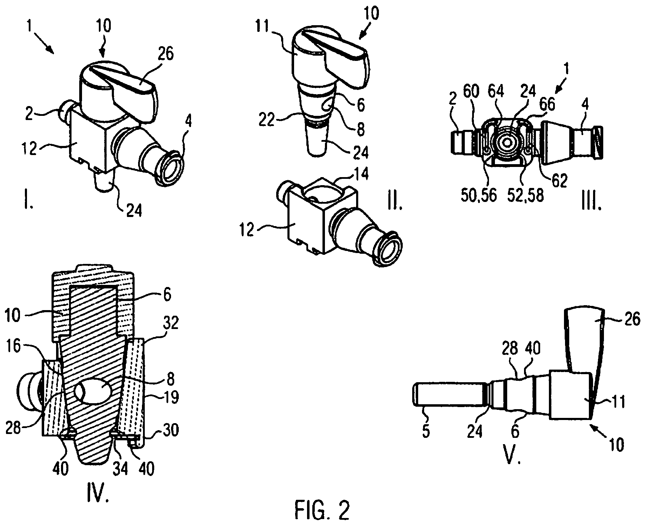

In Fig. 1 ist als I. ein erstes Beispiel eines nicht erfindungsgemäßen Federelements 34 gezeigt. Das Federelement 34 weist dabei zwei sich bevorzugt länglich, insbesondere gerade, erstreckenden Anteile 50, 52 auf, die erfindungsgemäß zum Anliegen an einem Verbindungs- und Trennelement 6 (vgl. z.B. Fig. 2 II.) bestimmt sind, um Zugspannungen im dem Verbindungs- und Trennelement 6 zu erzeugen. Daher sind die sich bevorzugt gerade erstreckenden Anteile auch als erster Positionieranteil 56 und als zweiter Positionieranteil 58 bezeichenbar. Die beiden Positionieranteile 56, 58 sind über einen gebogenen Anteil 54 miteinander verbunden. Der gebogene Anteil 54 und die Enden des Federelements 34 sind bevorzugt formschlüssig mit einem Hauptkörper 12 (vgl. z.B. Fig. 2 IV.) koppelbar, wobei durch die formschlüssige Kopplung Kräfte in der axialen Erstreckungsrichtung A des Verbindungs- und Trennelements 6 auf den Hauptkörper 12 übertragen werden.

Durch Fig. 1 II. wird ein weiteres Beispiel für ein Federelement 34 dargestellt. Gegenüber der Darstellung aus Fig. 1 I. umschließt der gebogene Anteil 54 den ersten und zweiten Positionieranteil 56, 58 zumindest mehrheitlich in einer Richtung. Der gebogene Anteil 54 wird hierbei durch einen gebogenen Hauptabschnitt 68 und zwei gebogene Nebenabschnitte 70 und 72 gebildet. Die Nebenabschnitte 70, 72 weisen beide bevorzugt den selben Radius auf, wobei der Radius des Hauptabschnitts 68 bevorzugt zumindest um den Faktor 2 oder den Faktor 2,5 oder den Faktor 3 größer ist als der Radius eines Nebenabschnitts 70, 72. Die Positionierabschnitte 56, 58 weisen bevorzugt eine Länge zwischen 3mm und 10mm auf, insbesondere sind sie länger als 3 mm oder länger als 4 mm oder länger als 5mm oder genau 5mm lang. Ferner sind die Positioniermittel 56, 58 bevorzugt zwischen 2mm und 10mm voneinander beabstandet, insbesondere parallel voneinander beabstandet, wobei die Positioniermittel 56, 58 bevorzugt mindestens 2mm oder mindestens 3mm oder mindestens oder genau 4mm voneinander beabstandet sind.

Fig. 2 zeigt durch die Darstellungen I.-V. verschiedene Ansichten und Bauteile einer exemplarischen Ausführungsform der vorliegenden Erfindung.

In Fig. 2 I. ist der demontierbare Hahn 1 in einem zusammengebauten bzw. montierten Zustand gezeigt. Es ist ersichtlich, dass der Hahn 1 einen Hauptkörper 12 aufweist, der mindestens ein erstes Anschlussteil 2 und ein zweites Anschlussteil 4 aufweist. Die Anschlussteile 2, 4 können hierbei gleich oder verschieden ausgestaltet sein. In den Hauptköper 12 ist ein Handbetätigungselement 10 eingesteckt. Das Handbetätigungselement 10 dient zum Rotieren des Verbindungs- und Trennelements 6, wobei das Handbetätigungselement 10 und das Verbindungs- und Trennelement 6 mechanisch gekoppelt sind, insbesondere einstückig erzeugt sind. Bevorzugt ist das Verbindungs- und Trennelement 6 somit als Bestandteil des Handbetätigungselements 10 anzusehen. Das Handbetätigungselement 10 bildet bevorzugt ebenfalls ein Griffteil 26 aus, das sich bevorzugt hebelartig orthogonal zur Längserstreckungsrichtung des Verbindungs- und Trennelements 6 erstreckt. Weiterhin kennzeichnet das Bezugszeichen 24 einen Fortsatz, der sich bevorzugt aus dem Hauptkörper 12 heraus erstreckt und somit bevorzugt in Umfangsrichtung zumindest abschnittsweise vom Hauptkörper 12 nicht umgeben ist.

Fig. 2 II. zeigt den erfindungsgemäßen Hahn 1 in einem demontierten Zustand. Es ist ersichtlich, dass das Verbindungs- und Trennelement 6 ein Durchgangsloch 8 aufweist. In der gezeigten Ausrichtung verbindet das Durchgangsloch 8 in Fig. 2 I. somit den ersten Anschlussteil 2 und den zweiten Anschlussteil 4, wodurch ein Fluid, insbesondere eine Flüssigkeit oder ein Gas, von einem Anschlussteil zum anderen Anschlussteil geleitet werden kann. Der Fortsatz 24 ist auf der Seite des Verbindungs- und Trennelements 6 angeordnet, auf der das Verbindungs- und Trennelement den Kegelabschnitt mit dem kleinsten Radius 22 ausbildet, d.h. auf der dem Griffteil 26 gegenüberliegenden Seite. Das Bezugszeichen 11 kennzeichnet einen Basisteil des Handbetätigungselements 10, wobei über das Basisteil 11 der Griffteil 26 mit dem Verbindungs- und Trennelement 6 mechanisch, insbesondere einstückig, verbunden ist. Ferner kennzeichnet das Bezugszeichen 14 den durch den Hauptkörper 12 ausgebildeten Innenraum, der zur Aufnahme des Verbindungs- und Trennelements 6 ausgebildet ist.

Fig. 2 III. zeigt eine Draufsicht auf die Unterseite des erfindungsgemäßen Hahns 1 in dem zusammengebauten Zustand. Es ist hierbei erkennbar, dass das Federelement 34 ebenfalls mindestens zwei längliche Anteile 50, 52 aufweist. Die zwei länglichen Anteile 50, 52 sind bevorzugt als zwei längliche Positionieranteile 56, 58 ausgebildet und kontaktieren besonders bevorzugt eine Wandung 40 (vgl. Fig. 2 IV.) zum Erzeugen einer Zugkraft in dem Verbindungs- und Trennelement 6 bevorzugt zum Erzeugen der Flächenpressung zwischen der Kontaktoberfläche 16 und dem kegelförmigen Oberflächenanteil 28 des Verbindungs- und Trennelements 6. Ferner weist das Federelement 34 zusätzlich mindestens zwei längliche Halteanteile 60, 62 auf, wobei die länglichen Halteanteile 60, 62 die Enden des Federelements 34 bilden und form- oder reibschlüssig mit dem Hauptkörper 12 gekoppelt sind.

Hierbei ist jeder sich bevorzugt gerade erstreckende Positionieranteil 56, 58 über einen gebogenen Anteil 64, 66 mit einem sich bevorzugt gerade ersteckenden Halteanteil 60, 62 verbunden.

Fig. 2 IV. zeigt eine Schnittdarstellung durch den erfindungsgemäßen Hahn 1 in einem zusammengebauten Zustand. Das Federelement 34 liegt dabei an der bevorzugt geneigt zur Erstreckungsrichtung A des Verbindungs- und Trennelements 6 ausgerichteten und besonders bevorzugt umlaufenden Wandung 40 an und leitet darüber Kräfte in das Verbindungs- und Trennelement 6 ein. Durch die eingeleiteten Kräfte werden Zugspannungen in dem Verbindungs- und Trennelement 6 erzeugt. Durch die Zugspannungen wird der kegelförmige Oberflächenanteil 28 des Verbindungs- und Trennelements 6 an die dazu bevorzugt negativ ausgebildete Kontaktoberfläche 16 des Hauptkörpers 12 angepresst. Die Neigung der kegelförmigen Oberfläche des Verbindungs- und Trennelements 6 gegenüber der Längserstreckungsrichtung A des Verbindungs- und Trennelements 6 liegt in hierin bevorzugt beschriebenen Ausführungsformen zwischen 1° und 10° und bevorzugt zwischen 2° und 8°. Das Bezugszeichen 32 kennzeichnet ein oberes Ende des Hauptkörpers 12 und das Bezugszeichen 30 kennzeichnet ein unteres Ende des Hauptkörpers 12. Das Verbindungs- und Trennelement 6 wird dabei im Bereich des oberen Endes 32 in den Hauptkörper 12 eingeführt und tritt dann bevorzugt im Bereich des unteren Endes 30 wieder bevorzugt abschnittsweise aus dem Hauptkörper 12 aus. Das Bezugszeichen 19 kennzeichnet ferner die äußere Oberfläche des Hauptkörpers 12. Der Hauptkörper 12 besteht bevorzugt aus Metall, insbesondere Stahl, oder einem Kunststoffmaterial bzw. weist Metall oder ein Kunststoffmaterial auf.

Fig. 2 V. zeigt ein Beispiel eines alternativen Handbetätigungselements 10, das alternativ Einsatz finden kann. Die Öffnung 8 muss hierbei nicht als gerade Durchgangsöffnung ausgebildet sein, sondern kann sich ausgehend von der kegelförmigen Umfangswandung des Verbindungs- und Trennelement 6 in der Längserstreckungsrichtung A erstrecken und kann somit über einen am Handbetätigungselement 10 ausgebildeten oder angeordneten Anschlussteil 5 das Fluid zu- oder abführen.

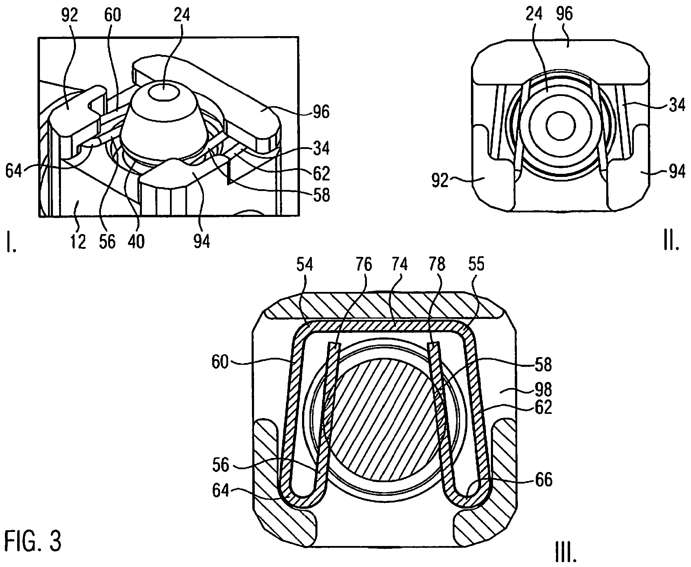

Fig. 3 I. zeigt eine schematische Darstellung einer Unterseite des erfindungsgemäßen Hahns 1 in einem montierten Zustand. Gemäß dieser Darstellung wird ein Federelement 34 verwendet, das zwei geneigt zueinander ausgerichtete Positionieranteile 56, 58 aufweist.

Das Federelement 34 weist ferner mindestens drei längliche, insbesondere gerade, Halteanteile 60, 62, 74 (vgl. Fig. 3 II.) auf. Die Positionieranteile 56, 58 bilden die Enden 76, 78 des Federelements 34 aus und erstrecken sich bevorzugt gerade. Jeder Positionieranteil 56, 58 ist hierbei über einen gebogenen Anteil 64, 66 mit einem Halteanteil 60, 62 verbunden, wobei ein zentraler länglicher Halteanteil 74 mittels zweier gebogener Anteile 54, 55 beiderseits mit jeweils einem der weiteren Halteanteile 60, 62 verbunden ist. Die Halteanteile 60, 62, 74 sind hierbei form- oder reibschlüssig mit dem Hauptkörper 12 gekoppelt. Der Hauptkörper 12 weist dazu die Halteelemente 92, 94, 96 auf. Diese Halteelemente 92, 94, 96 bilden dabei jeweils mindestens eine Ausnehmung zum Bereitstellen von mindestens einer Anlagefläche aus, an welche die gebogenen Abschnitte 54, 55, 64, 66 und/oder die Halteanteile 60, 62, 74 in der Erstreckungsrichtung A des Verbindungs- und Trennelements 6 anliegen. Das Bezugszeichen 98 kennzeichnet die Hauptanlagefläche, an der das Federelement 34 anliegt.

Fig. 3 II. zeigt eine Draufsicht auf die in Fig. 3 I. gezeigte Anordnung.

Fig. 3 III. zeigt eine geschnittene Darstellung der Ansicht aus Fig. 3 I. Es können dieser Darstellung bevorzugte Anlagebereiche an den Halteelementen 92, 94, 94 entnommen werden. Ferner zeigt diese Darstellung, dass die Anlagebereiche bevorzugt zumindest abschnittsweise negativ zu den gebogenen Anteilen 64 und 66 ausgebildet sind.

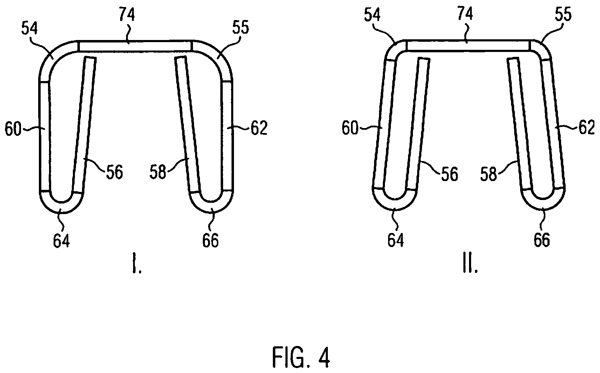

Fig. 4 zeigt zwei weitere Beispiele für Federelemente 34, die im Rahmen der vorliegenden Erfindung eingesetzt werden können. Bevorzugt sind die jeweils über einen gebogenen Anteil 54, 55 miteinander verbundenen Halteanteile 60, 62, 74 in einem Winkel zwischen 70° und 110°, insbesondere in einem Winkel zwischen 80° und 100° oder in einem Winkel zwischen 80° und 90° oder in einem Winkel zwischen 90° und 100° oder in einem Winkel von 90°, zueinander ausgerichtet. Derartige Federgeometrien sind vorteilhaft, da die Federelemente 34 einfach positioniert werden können und neben den erforderlichen Sicherungseigenschaften auch die zur Erzeugung der Dichtwirkung erforderlichen Kräfte bereitstellen können. Das Federelement 34 bildet somit eine M-förmige Gestalt aus, wobei der Radius des die beiden Positionieranteile 56, 58 verbindenden gebogenen Anteils 54 größer ist als der Radius eines gebogenen Anteils 64, 66, der einen Halteanteil 60, 62 mit einem Positionieranteil 56, 58 verbindet.

Gemäß Fig. 4 I. sind die jeweils über einen gebogenen Anteil 64, 66 mit einem Positionieranteil 56, 58 verbundenen Halteanteile 60, 62 parallel zueinander ausgerichtet. Die Positionieranteile 56, 58 sind bevorzugt gegenüber dem jeweils unmittelbar angrenzenden Halteanteil 60, 62 in einem Winkel zwischen 1° und 15° und bevorzugt in einem Winkel von 3° und 9°, insbesondere von 4°, 5°, 6°, 7° oder 8°, ausgerichtet.

Gemäß Fig. 4 II. sind die jeweils über einen gebogenen Anteil 64, 66 mit einem Positionieranteil 56, 58 verbundenen Halteanteile 60, 62 parallel zu dem jeweils unmittelbar anschließenden Positionieranteil 56, 58 ausgerichtet. Die Gesamtheit aus einem Positionieranteil 56, 58 und daran über einen gebogenen Anteil 64, 66 angeordneten Halteanteil 60, 62 ist bevorzugt jeweils gegenüber dem dritten bzw. zentralen Halteanteil 74 in einem Winkel zwischen 1° und 15° und bevorzugt in einem Winkel von 3° und 9°, insbesondere von 4°, 5°, 6°, 7° oder 8°, ausgerichtet.

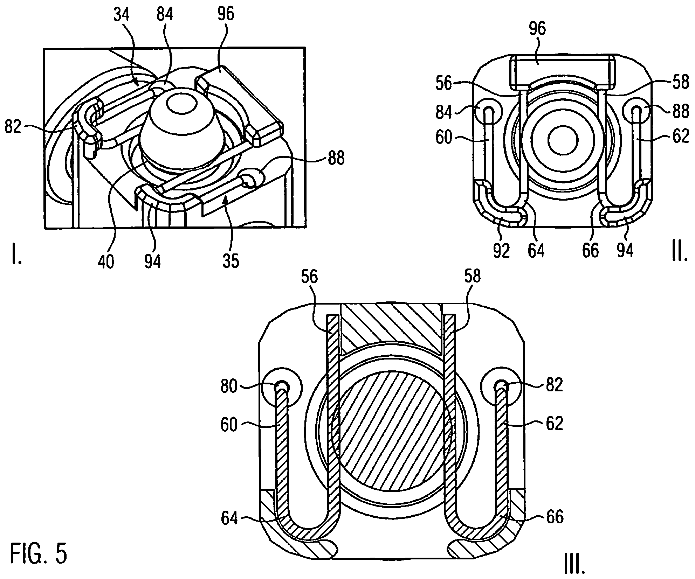

Fig. 5 zeigt ein nicht erfindungsgemäßes Beispiel. Hierbei sind mehrere, insbesondere genau zwei, Federelemente 34, 35 ausgebildet. Jedes Federelement 34, 35 weist dabei einen länglichen, insbesondere geraden, Halteanteil 60, 62 und einen länglichen, insbesondere geraden, Positionieranteil 56, 58 auf. Die Halteanteile 60, 62 und die Positionieranteile 56, 58 sind dabei jeweils mittels eines gebogenen Anteils 64, 66 miteinander verbunden, wobei die Positionieranteile 56, 58 die bevorzugt geneigte und besonders bevorzugt umlaufende Wandung 40 zum Erzeugen einer Zugkraft in dem Verbindungs- und Trennelement 6 bevorzugt zum Erzeugen der Flächenpressung zwischen der Kontaktoberfläche 16 und dem kegelförmigen Oberflächenanteil 28 des Verbindungs- und Trennelements 6 kontaktieren. Die Halteanteile 60, 62 sind form- oder reibschlüssig mit dem Hauptkörper 12 gekoppelt, und zwar über die Halteelemente 92, 94, 96, die bevorzugt analog zu den Ausführungen zu Fig. 3 ausbildet sind. Die Positionieranteile 56, 58 wirken jeweils mit einem zum gebogenen Anteil 64, 66 beabstandeten Ende formschlüssig mit dem Hauptkörper 12 zusammen, wobei sich an die Halteanteile 60, 62 jeweils ein Zapfenanteil 80, 82 anschließt, der sich orthogonal zu einer Ebene erstreckt, die durch die Positionieranteile 56, 58 und Halteanteile 60, 62 aufgespannt wird, wobei jeder Zapfenanteil 80, 82 jeweils in einer Ausnehmung oder Bohrung 84, 88 im Hauptkörper 12 eingesteckt ist. Die Ausnehmung oder Bohrung 84, 88 ist bevorzugt mit einer Fase zum leichteren Einführen des Zapfenanteils 80, 82 versehen.

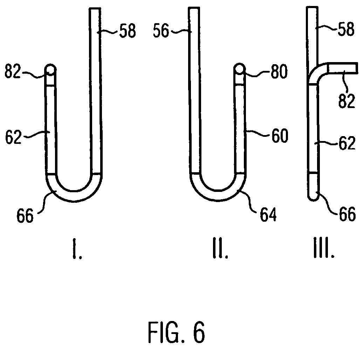

Fig. 6 zeigt die in Fig. 5 eingesetzten Federelemente 34, 35. Fig. 6 I. und III. zeigen dabei das Federelement 35 und Fig. 6 II. zeigt das Federelement 34. Bei beiden Federelementen 34, 35 erstreckt sich der Positionieranteil 56, 58 bevorzugt parallel zum jeweiligen Halteanteil 60, 62.

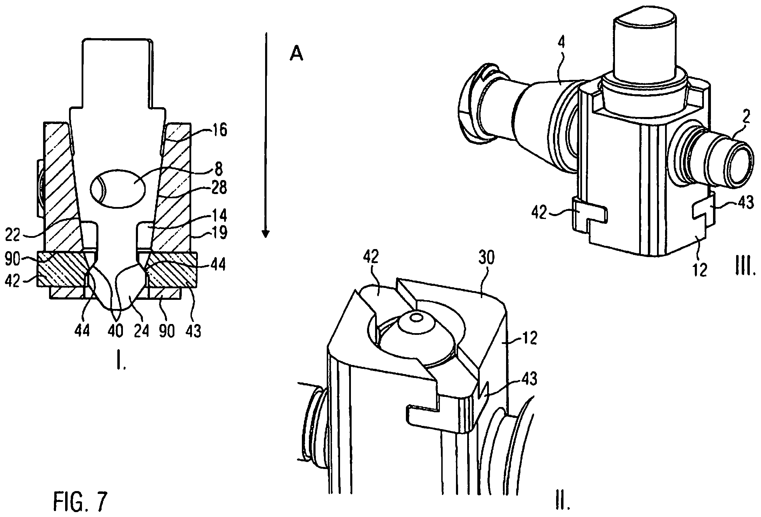

Fig. 7 zeigt ein weiteres nicht erfindungsgemäßes Beispiel.

Fig. 7 I. zeigt dabei eine Schnittdarstellung durch den demontierbaren Hahn 1. Die Figuren 7 II. und 7 III. zeigen perspektivische Darstellungen des in Fig. 7 I. geschnitten dargestellten Hahns 1.

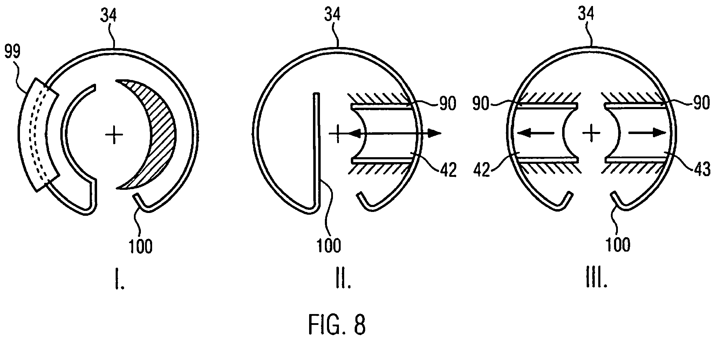

Der Fortsatz 24 bildet dabei ebenfalls eine gegenüber der Erstreckungsrichtung A des Verbindungs- und Trennelements 6 geneigt ausgerichtete umlaufende Oberfläche 40 aus. Ferner ist mindestens ein in einer im Hauptkörper 12 ausgebildeten Führung 90 verschiebbares Fixiermittel 42 vorgesehen. Das Fixiermittel 42 ist mit einem Federelement 34 (vgl. Fig. 8III.) federkraftbeaufschlagt und weist eine Anpressstelle 44 auf, die zum Anpressen an die Oberfläche 40 dient. Im dargestellten Fall weist der Hauptkörper 12 mehrere, insbesondere genau zwei, Fixierelemente 42, 43 auf.

Fig. 8 zeigt drei Beispiele, wie das in Fig. 7 dargestellte Grundkonzept alternativ ausgeführt werden kann, wobei Fig. 8 III. das Grundkonzept repräsentiert.

Gemäß Fig. 8 I. weist der Hauptkörper 12 eine Federführung 99 zum Aufnehmen des Federelements 34 auf, wobei das Federelement 34 einen gebogenen Abschnitt aufweist, mit dem es mit der Federführung 99 gekoppelt ist. Der gebogene Abschnitt ist bevorzugt ein Teil eines gebogenen Anteils, der den Hauptkörper 12 in Umfangsrichtung zumindest mehrheitlich und bevorzugt zu mehr als 270° umschließt, wobei der gebogene Abschnitt einerseits ein Sicherungsteil 100 ausbildet, das mit dem Hauptkörper 12 oder dem Fixiermittel 42 gekoppelt ist und sich andererseits an den gebogenen Anteil ein weiterer gebogener Anteil anschließt. Der weitere gebogene Anteil und der gebogene Anteil sind bevorzugt durch einen länglichen, insbesondere geraden, Anteil voneinander beabstandet und wobei der weitere gebogene Anteil und der gerade Anteil durch den gebogenen Anteil zumindest mehrheitlich umschlossen werden.

Das Federelement 34 aus Fig. 8 II. bildet einen sich länglich, insbesondere gerade, erstreckenden Sicherungsteil 100 aus, der zum Einbringen in eine dafür vorgesehene Ausnehmung oder einen dafür vorgesehenen Aufnahmebereich des Hauptkörpers 12 gestaltet ist. An den Sicherungsteil 100 schließt sich ein Kraftübertragungsteil an, wobei mittels dem Kraftübertragungsteil das Fixierelement in Richtung des Verbindungs- und Trennelements 6 mit einer Anpresskraft beaufschlagt wird.

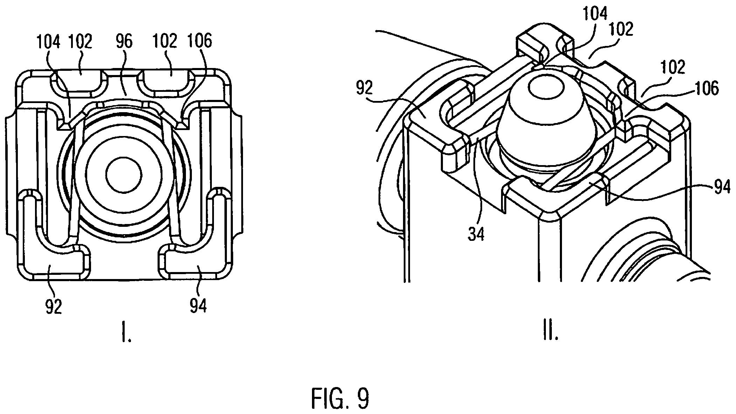

Durch die Figuren 9I. und 9II. wird eine Ausführungsform dargestellt, die eine Modifikation der durch die Figuren 3I-3III gezeigten Ausführungsform darstellt. Das Federelement 34 ist dabei ebenfalls bevorzugt entsprechend der Fig. 4I. oder der Fig. 4II. ausgestaltet.

Der Hauptunterschied gegenüber der durch die Fig. 3 dargestellten Ausführungsform ist die Ausgestaltung des dritten Halteelements 96. Dieses mit dem zentralen Halteanteil 74 des Federelements (vgl. Fig. 3III. oder Fig. 4) zusammenwirkende Halteelement 96 ist bevorzugt derart ausgebildet, dass es das ersten Ende 76 und das zweite Ende 78 des Federelements 34 um mindestens 1mm und bevorzugt um mindestens 2mm und besonders bevorzugt um mindestens 2,5mm und höchst bevorzugt um 3mm oder um mindestens 3,5mm oder um mindestens 4mm überlagert. Das dritte Halteelement 96 bildet somit Überdeckungsvorsprünge bzw. einen ersten Haltevorsprung 104 und einen zweiten Haltevorsprung 106 aus, die mit den Enden 76, 78 des Federelements 34, insbesondere formschlüssig, zusammenwirken.

Zusätzlich oder alternativ kann das dritte Halteelement 96 eine oder mehrere, insbesondere zwei oder mindestens zwei oder genau zwei oder drei oder mindestens drei oder genau drei, Ausnehmungen 102 aufweisen. Die mindestens eine Ausnehmung 102 erstreckt sich bevorzugt ausgehend von der äußeren Oberfläche des Hauptkörper 12 in Richtung Innenraum 14 des Hauptkörpers 12 hinein. Die Ausnehmung/en 102 ist/sind bevorzugt derart gestaltet, dass das Federelement 34 über die Ausnehmung/en 102 zugänglich ist.

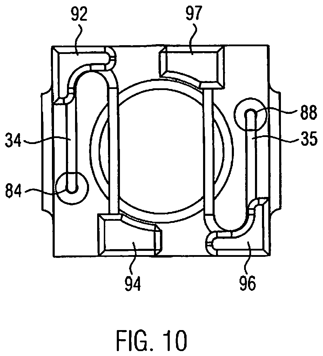

Besonders bevorzugt bildet das dritte Halteelement 96 somit zwei Haltevorsprünge 102, 104 und zwei Ausnehmungen 102 aus. Fig. 10 zeigt eine Variante des durch Fig. 5 dargestellten Beispiels, bei dem zwei baugleiche Federelemente 34 eingesetzt werden. Bevorzugt wird jedes Federelement 34, 35 durch eine Bohrung oder Ausnehmung 84, 88, und je zwei Halteelemente 92, 94 und 96, 97 am Hauptkörper 12 gehalten. Die Relativpositionen der ersten Bohrung 34, des ersten Halteelements 92 und des zweiten Halteelements 94 zueinander entsprechen dabei bevorzugt den Relativpositionen der zweiten Bohrung 88, dem dritten Halteelement 96 und dem vierten Halteelement 97 zueinander. Bevorzugt ist das erste Federelement 34 gegenüber dem zweiten Federelement 35 um 180° rotiert angeordnet.

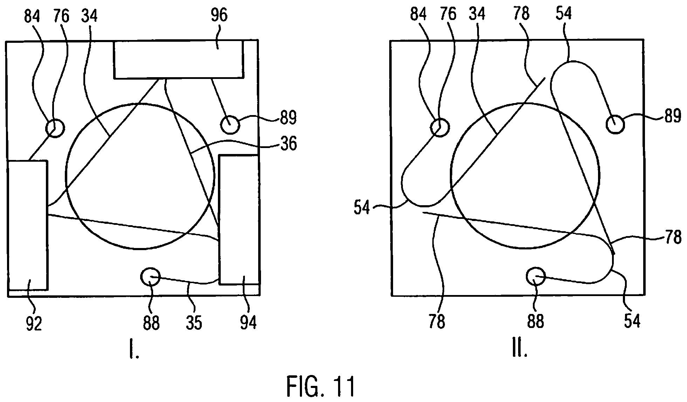

Fig. 11 zeigt ein weiteres nicht erfindungsgemäßes Beispiel, wobei drei Federelemente 34, 35, 36 vorgesehen sind. Die einzelnen Federelemente 34, 35, 36 sind dabei bevorzugt baugleich ausgebildet. Weiterhin sind die Federelemente 34, 35, 36 bevorzugt mit einem ersten Ende 76 in einer Ausnehmung oder Bohrung 84 angeordnet und wirken jeweils mit einem zweiten Ende 78 mit einem Halteteil 92, 94, 96 bevorzugt formschlüssig zusammen. Bevorzugt werden durch jedes Halteelement 92, 94, 96 jeweils zwei Federelemente 34, 35, 36 formschlüssig gehalten. Weiterhin entspricht die Relativposition der ersten Ausnehmung bzw. Bohrung 84 gegenüber dem ersten Halteelement 92 und dem dritten Halteelement 96 der Relativposition der zweiten Ausnehmung bzw. Bohrung 88 gegenüber dem zweiten Halteelement 94 und dem ersten Halteelement 92 und/oder der dritten Ausnehmung bzw. Bohrung 89 gegenüber dem dritten Halteelement 96 und dem zweiten Halteelement 94.

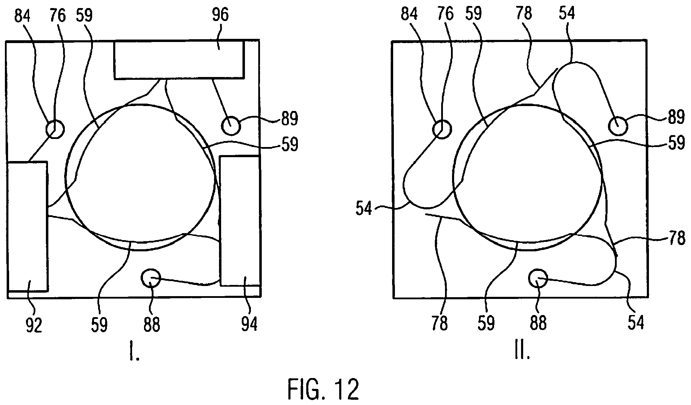

Fig. 11II. zeigt rein illustratorisch die in Fig. 11I. gezeigte Anordnung ohne die Halteelemente 92, 94, 96.Die durch Fig. 12I. und 12II. dargestellte Anordnung entspricht im Wesentlichen der durch die Fig. 11I. und 11II. dargestellten Anordnung, wobei die Federelemente 34, 35, 36 zum Ausbilden eines Linienkontakts mit dem Verbindungs- und Trennelement 6 ausgebildet sind. Die Federelemente 34, 35, 36 weisen daher zwischen ihrem zweiten Ende 78 und dem gebogenen Anteil 54 einen gebogenen Positionieranteil 59 auf. Diese Ausgestaltung ist vorteilhaft, da ein größerer Kontaktbereich zwischen den Federelementen 34, 35, 36 und dem Verbindungs- und Trennelement 6 geschaffen wird, wodurch größere Kräfte zwischen den Federelementen 34, 35, 36 und dem Verbindungs- und Trennelement 6 übertragen werden können.

Die vorliegende Erfindung bezieht sich somit auf einen Hahn entsprechend Anspruch 1.

**Bezugszeichenliste**

| | | | |
|---|---|---|---|
| 1 | Demontierbarer Hahn | 36 | drittes Federelement |
| 2 | Erstes Anschlussteil | 40 | umlaufende Wandung |
| 4 | Zweites Anschlussteil | 42 | Fixiermittel |
| 5 | am Handbetätigungselement ausgebildeter Anschlussteil | 43 | weiteres Fixiermittel |
| | | 44 | Anpressstelle |
| 6 | Verbindungs- und Trennelement | 50 | erster länglicher Anteil |
| 8 | Durchgangsöffnung | 52 | zweiter länglicher Anteil |
| 10 | Handbetätigungselement | 54 | gebogener Anteil |
| 11 | Basisteil | 55 | weiterer gebogener Anteil |
| 12 | Hauptkörper | 56 | erster Positionieranteil |
| 14 | Innenraum | 58 | zweiter Positionieranteil |
| 16 | Kontaktoberfläche | 59 | gebogener Positionieranteil |
| 19 | äußere Oberfläche | 60 | erster Halteanteil |
| | des Hauptkörpers | 62 | zweiter Halteanteil |
| 22 | Kegelabschnitt mit dem kleinsten Durchmesser | 64 | gebogener Anteil zwischen erstem Halteanteil und erstem Positionieranteil |
| 24 | Fortsatz | | |
| 26 | Griffteil | 66 | gebogener Anteil zwischen zweitem Halteanteil und zweitem Positionieranteil |
| 28 | kegelförmiger Oberflächenanteil | | |
| 30 | unteres Ende des Hauptkörpers | 68 | Hauptabschnitt |
| 32 | oberes Ende des Hauptkörpers | 70 | erster Nebenabschnitt |
| | | 72 | zweiter Nebenabschnitt |
| 34 | Federelement | 74 | dritter Halteanteil / zentraler länglicher Halteanteil |
| 35 | weiteres Federelement | | |
| 76 | erste Ende des Federelements | 96 | drittes Halteelement |
| 78 | zweites Ende des Federelements | 97 | Viertes Halteelement |
| 80 | erster Zapfenanteil | 98 | Hauptfederanlagefläche |
| 82 | zweiter Zapfenanteil | 99 | Federführung |
| 84 | erste Bohrung | 100 | Sicherungsteil |
| 88 | zweite Bohrung | 102 | Ausnehmung |
| 89 | dritte Bohrung | 104 | erster Haltevorsprung |
| 90 | Führung | 106 | zweiter Haltevorsprung |
| 92 | erstes Halteelement | A | Axiale Erstreckungsrichtung |
| 94 | zweites Halteelement | | bzw. axiale Richtung |

## Patentansprüche

1. Hahn (1) zum Erzeugen und Trennen einer Fluidverbindung zwischen mindestens zwei Anschlussteilen (2, 4),
mindestens umfassend
ein Verbindungs- und Trennelement (6) zum Erzeugen der Fluidverbindung und zum Trennen der Fluidverbindung,
wobei das Verbindungs- und Trennelement (6) zumindest abschnittsweise kegelförmig ausgebildet ist und
mindestens eine Durchgangsöffnung (8) zum Erzeugen der Fluidverbindung aufweist, ein Handbetätigungselement (10) zum Rotieren des Verbindungs- und Trennelements (6),
wobei das Handbetätigungselement (10) und das Verbindungs- und Trennelement (6) mechanisch gekoppelt sind,
einen Hauptkörper (12),
wobei der Hauptkörper (12) mindestens ein Anschlussteil (2) und einen Innenraum (14) zum Aufnehmen des Verbindungs- und Trennelements (6) aufweist,
wobei der Innenraum (14) eine Kontaktoberfläche (16) zum in Kontakt bringen mit dem Verbindungs- und Trennelement (6) aufweist,
wobei die Kontaktoberfläche (16) zumindest abschnittsweise negativ zum kegelförmigen Oberflächenanteil (28) des Verbindungs- und Trennelements (6) ausgebildet ist,
wobei
mindestens ein Federelement (34) zum formschlüssigen Fixieren der Position des Verbindungs- und Trennelements (6) gegenüber dem Hauptkörper (12) vorgesehen ist, wobei das Federelement (34) im oder am Hauptkörper (12) angeordnet ist
wobei das Verbindungs- und Trennelement (6) in seiner axialen Erstreckungsrichtung (A) anschließend an den Kegelabschnitt (22) mit dem kleinsten Durchmesser einen Fortsatz (24) aufweist,
wobei der Fortsatz (24) eine Wandung (40), insbesondere eine gegenüber der axialen Erstreckungsrichtung, geneigte Wandung aufweist, wobei das mindestens eine Federelement (34) die Wandung (40) zum Erzeugen einer Zugkraft in dem Verbindungs- und Trennelement (6) kontaktiert,
wobei das Federelement (34) mindestens zwei längliche Anteile (50, 52) aufweist, wobei die zwei länglichen Anteile (50, 52) durch einen gebogenen Anteil (54) miteinander verbunden sind,
wobei die zwei länglichen Anteile (50, 52) als zwei längliche Positionieranteile (56, 58) ausgebildet sind und die Wandung (40) zum Erzeugen einer Zugkraft in dem Verbindungs- und Trennelement (6) kontaktieren,
**dadurch gekennzeichnet, dass**
das Federelement (34) zusätzlich mindestens drei längliche Halteanteile (60, 62, 74) aufweist,
wobei die Positionieranteile (56, 58) die Enden (76, 78) des Federelements (34) bilden, wobei jeder Positionieranteil (56, 58) über einen gebogenen Anteil (64, 66) mit einem Halteanteil (60, 62) verbunden ist,
wobei ein zentraler länglicher Halteanteil (74) mittels zweier gebogener Anteile (54, 55) beiderseits mit jeweils einem der weiteren Halteanteile (60, 62) verbunden ist,
wobei die Halteanteile (60, 62, 74) über Halteelemente (92,94, 96) form- und/oder reibschlüssig mit dem Hauptkörper (12) gekoppelt sind.

2. Hahn nach Anspruch 1,
**dadurch gekennzeichnet, dass**
das Federelement (34) zusätzlich zum Erzeugen einer Flächenpressung und/oder zum Fixieren der Kontaktflächen zwischen der Kontaktoberfläche (16) und dem kegelförmigen Oberflächenanteil (28) des Verbindungs- und Trennelements (6) vorgesehen ist.

3. Hahn nach Anspruch 1 oder Anspruch 2,
**dadurch gekennzeichnet, dass**
das Verbindungs- und Trennelement (6) zum Demontieren oder Montieren gegenüber dem Federelement (34) in seiner axialen Erstreckungsrichtung (A) bewegbar ist.

4. Hahn nach Anspruch 1,
**dadurch gekennzeichnet, dass**
das Federelement (34) zusätzlich mindestens zwei längliche Halteanteile (60, 62) aufweist,
wobei die länglichen Halteanteile (60, 62) die Enden (76, 78) des Federelements (34) bilden und form- oder reibschlüssig mit dem Hauptkörper (12) gekoppelt sind und wobei jeder Positionieranteil (56, 58) über einen gebogenen Anteil (64, 66) mit einem Halteanteil (60, 62) verbunden ist.

5. Hahn nach Anspruch 4,
**dadurch gekennzeichnet, dass**
das Federelement (34) eine M-förmige Gestalt ausbildet, wobei der Umschlingungswinkel des Radius des die beiden Positionieranteile (56, 58) verbindenden gebogenen Anteils (54) kleiner ist als der Umschlingungswinkel des Radius eines gebogenen Anteils (64, 66), der einen Halteanteil (60, 62) mit einem Positionieranteil (56, 58) verbindet.

6. Hahn nach Anspruch 1,
**dadurch gekennzeichnet, dass**
der gebogene Anteil (54) Abschnitte mit unterschiedlichen Radien aufweist, wobei ein Hauptabschnitt (68) einen Radius aufweist der größer ist als die Radien zweier Nebenabschnitte (70, 72), wobei die Positionieranteile (56, 58) über die Nebenabschnitte (70, 72) mit dem Hauptabschnitt (68) verbunden sind.

7. Hahn nach Anspruch 1,
**dadurch gekennzeichnet, dass**
die jeweils über einen gebogenen Anteil (54, 55) miteinander verbundenen Halteanteile (60, 62, 74) in einem Winkel zwischen 70° und 110°, insbesondere in einem Winkel von 90°, zueinander ausgerichtet sind.

8. Hahn nach Anspruch 1,
**dadurch gekennzeichnet, dass**
zwei Federelemente (34, 35) vorgesehen sind.

9. Hahn nach Anspruch 8,
**dadurch gekennzeichnet, dass**
jedes Federelement (34, 35) einen länglichen Halteanteil (60, 62) und einen länglichen Positionieranteil (56, 58) aufweist,
wobei der Halteanteil (60, 62) und der Positionieranteil (56, 58) jeweils mittels eines gebogenen Anteils (64, 66) miteinander verbunden sind,
wobei die Positionieranteile (56, 58) die Wandung (40) zum Erzeugen einer Zugkraft in dem Verbindungs- und Trennelement (6) kontaktieren,
wobei die länglichen Halteanteile (60, 62) form- oder reibschlüssig mit dem Hauptkörper (12) gekoppelt sind,
wobei die Positionieranteile (56, 58) jeweils mit einem zum gebogenen Anteil (64, 66) beabstandeten Ende formschlüssig mit dem Hauptkörper (12) zusammenwirken und wobei sich an die Halteanteile (60, 62) jeweils ein Zapfenanteil (80, 82) anschließt, der sich orthogonal zu einer Ebene erstreckt, die durch die Positionieranteile (56, 58) und Halteanteile (60, 62) aufgespannt wird, wobei jeder Zapfenanteil (80, 82) jeweils in einer Ausnehmung oder Bohrung (84, 88) im Hauptkörper (12) eingesteckt ist.

10. Hahn nach Anspruch 1,
**dadurch gekennzeichnet, dass**
der Hauptkörper (12) eine Federführung (99) zum Aufnehmen des Federelements (34) aufweist, wobei das Federelement (34) einen gebogenen Abschnitt aufweist, mit dem es mit der Federführung (99) gekoppelt ist, wobei der gebogene Abschnitt ein Teil eines gebogenen Anteils ist, der den Hauptkörper (12) in Umfangsrichtung zumindest mehrheitlich und bevorzugt zu mehr als 270° umschließt, wobei der gebogene Abschnitt einerseits ein Sicherungsteil (100) ausbildet, das mit dem Hauptkörper (12) oder dem Fixiermittel (42) gekoppelt ist und sich andererseits an den gebogenen Anteil ein weiterer gebogener Anteil anschließt, wobei der weitere gebogene Anteil und der gebogene Anteil durch einen länglichen, insbesondere geraden, Anteil voneinander beabstandet sind und wobei der weitere gebogene Anteil und der gerade Anteil durch den gebogenen Anteil zumindest mehrheitlich umschlossen werden.

11. Hahn nach Anspruch 1,
**dadurch gekennzeichnet, dass**
das Federelement (34) einen sich länglich, insbesondere gerade, erstreckenden Sicherungsteil (100) ausbildet, der zum Einbringen in eine dafür vorgesehene Ausnehmung oder einen dafür vorgesehenen Aufnahmebereich des Hauptkörpers (12) gestaltet ist, wobei sich an den Sicherungsteil (100) ein Kraftübertragungsteil anschließt, wobei mittels dem Kraftübertragungsteil das Fixierelement in Richtung des Verbindungs- und Trennelements (6) mit einer Anpresskraft beaufschlagt wird.

12. Hahn nach Anspruch 1,
**dadurch gekennzeichnet, dass**
mehrere Fixiermittel (42, 43) vorgesehen sind,
wobei die Fixiermittel (42, 43) jeweils über eine im Hauptkörper (12) ausgebildete Führung (90) in radialer Richtung bewegbar sind und durch das Federelement (34) zueinander hingedrückt werden.

13. Hahn nach einem der vorangegangenen Ansprüche,
**dadurch gekennzeichnet, dass**
der Hahn (1) zerstörungsfrei zumindest in die Teile Verbindungs- und Trennelement (6), Federelement (34) und Hauptkörper (12) zerlegbar ist.

14. Hahn nach einem der vorangegangenen Ansprüche,
**dadurch gekennzeichnet, dass**
das Federelement (34) aus einem gebogenen Drahtstück besteht.

15. Hahn nach eine der vorangegangenen Ansprüche,
**dadurch gekennzeichnet, dass**
mehrere baugleiche, insbesondere zwei oder drei baugliche, Federelemente (34) vorgesehen sind.

16. Hahn nach Anspruch 15,
**dadurch gekennzeichnet, dass**
mindestens drei baugleiche Federelemente (34) vorgesehen sind, wobei jedes Federelement (34) mit einem Ende in einer Ausnehmung (84) um eine Rotationsachses rotierbar gelagert ist und mit einem anderen Ende in Erstreckungsrichtung der Rotationsachse formschlüssig von Halteelementen (92, 94, 96) gehalten wird.

## Claims

1. Cock (1) for creating and interrupting a fluid connection between at least two connecting parts (2, 4),
comprising at least
a connecting and interrupting element (6) for creating the fluid connection and for interrupting the fluid connection,
wherein the connecting and interrupting element (6) is conical at least in sections, and has at least one through-opening (8) for crating the fluid connection,
a manual actuating element (10) for rotating the connecting and interrupting element (6),
said manual actuating element (10) and said connecting and interrupting element (6) being mechanically coupled,
a main body (12),
wherein the main body (12) comprises at least one connecting part (2) and an inner space (14) for receiving the connecting and interrupting element (6),
wherein the interior space (14) has a contact surface (16) for contacting the connecting and interrupting element (6),
wherein the contact surface (16) is formed negatively at least in sections to the conical surface portion (28) of the connecting and interrupting element (6),
wherein
at least one spring element (34) is provided for positively fixing the position of the connecting and interrupting element (6) relative to the main body (12), the spring element (34) being arranged in or on the main body (12)
wherein the connecting and interrupting element (6) has an extension (24) in its axial extension direction (A) adjacent to the taper section (22) with the smallest diameter,
wherein the extension (24) has a wall (40), in particular a wall inclined with respect to the axial direction of extension, wherein the at least one spring element (34) contacts the wall (40) for generating a tensile force in the connecting and interrupting element (6),
said spring element (34) having at least two elongated portions (50, 52), said two elongated portions (50, 52) being interconnected by a bent portion (54),
wherein the two elongated portions (50, 52) are formed as two elongated positioning portions (56, 58) and contact the wall (40) for generating a tensile force in the connecting and interrupting element (6)
**characterized in that**
the spring element (34) additionally comprises at least three elongated retaining portions (60, 62, 74),
wherein the positioning portions (56, 58) forming the ends (76, 78) of the spring element (34), wherein each positioning portion (56, 58) is connected to a retaining portion (60, 62) via a bent portion (64, 66),
wherein a central elongate retaining portion (74) is connected by means of two bent portions (54, 55) on either side to a respective one of the further retaining portions (60, 62),
wherein the retaining portions (60, 62, 74) are positively and/or frictionally coupled to the main body (12) via retaining elements (92, 94, 96).

2. Cock according to claim 1,
**characterized in that**
the spring element (34) is additionally provided for generating a surface pressure and/or for fixing the contact surfaces between the contact surface (16) and the conical surface portion (28) of the connecting and interrupting element (6).

3. Cock according to claim 1 or claim 2,
**characterized in that**
the connecting and interrupting element (6) is movable in its axial extension direction (A) for disassembly or assembly relative to the spring element (34).

4. Cock according to claim 1,
**characterized in that**
the spring element (34) additionally has at least two elongated retaining portions (60, 62),
wherein the elongated retaining portions (60, 62) form the ends (76, 78) of the spring element (34) and are positively or frictionally coupled to the main body (12), and
wherein each positioning portion (56, 58) is connected to a retaining portion (60, 62) via a bent portion (64, 66).

5. Cock according to claim 4,
**characterized in that**
the spring element (34) forms an M-shaped configuration, wherein the wrap angle of the radius of the bent portion (54) connecting the two positioning portions (56, 58) is smaller than the wrap angle of the radius of a bent portion (64, 66) connecting a holding portion (60, 62) to a positioning portion (56, 58).

6. Cock according to claim 1,
**characterized in that**
the bent portion (54) has sections with different radii, wherein a main section (68) having a radius larger than the radii of two secondary sections (70, 72), wherein the positioning portions (56, 58) being connected to the main section (68) via the secondary sections (70, 72).

7. Cock according to claim 1,
**characterized in that**
the retaining portions (60, 62, 74), which are each connected to one another via a bent portion (54, 55), are aligned with one another at an angle of between 70° and 110°, in particular at an angle of 90°.

8. Cock according to claim 1,
**characterized in that**
two spring elements (34, 35) are provided.

9. Cock according to claim 8,
**characterized in that**
each spring element (34, 35) has an elongated holding portion (60, 62) and an elongated positioning portion (56, 58),
wherein the retaining portion (60, 62) and the positioning portion (56, 58) are each connected to each other by means of a bent portion (64, 66),
wherein the positioning portions (56, 58) contacting the wall (40) for generating a tensile force in the connecting and interrupting element (6),
wherein the elongated retaining portions (60, 62) being positively or frictionally coupled to the main body (12),
wherein the positioning portions (56, 58) each positively cooperate with the main body (12) with an end spaced from the bent portion (64, 66), and
wherein the retaining portions (60, 62) are each adjoined by a spigot portion (80, 82) extending orthogonally to a plane spanned by the positioning portions (56, 58) and retaining portions (60, 62), each spigot portion (80, 82) being inserted into a respective recess or bore (84, 88) in the main body (12).

10. Cock according to claim 1,
**characterized in that**
the main body (12) has a spring guide (99) for receiving the spring element (34), the spring element (34) having a bent portion with which it is coupled to the spring guide (99), the bent portion being a part of a bent portion which circumferentially surrounds at least a majority of the main body (12) and preferably more than 270°, the bent portion forming on one side a securing part (100) which is coupled to the main body (12) or to the fixing means (42), and, on the other side, a further curved portion which adjoins the curved portion, the further curved portion and the curved portion being spaced apart from one another by an elongate, in particular straight, portion, and the further curved portion and the straight portion being at least majority-enclosed by the curved portion.

11. Cock according to claim 1,
**characterized in that**
the spring element (34) forms an elongate, in particular straight, extending securing part (100), which is designed for insertion into a recess provided for this purpose or a receiving region of the main body (12) provided for this purpose, wherein the securing part (100) being adjoined by a force transmission part, wherein the fixing element being subjected to a pressing force in the direction of the connecting and interrupting element (6) by means of the force transmission part.

12. Cock according to claim 1,
**characterized in that**
a plurality of fixing means (42, 43) are provided,
wherein the fixing means (42, 43) are each movable in radial direction via a guide (90) formed in the main body (12) and are pressed towards each other by the spring element (34).

13. Cock according to one of the preceding claims,
**characterized in that**
the cock (1) can be disassembled non-destructively at least into the parts connecting and interrupting element (6), spring element (34) and main body (12).

14. Cock according to one of the preceding claims,
**characterized in that**
the spring element (34) consists of a bent piece of wire.

15. Cock according to any of the preceding claims,
**characterized in that**
a plurality of identical, in particular two or three identical, spring elements (34) are provided.

16. Cock according to claim 15,
**characterized in that**
at least three identical spring elements (34) are provided, each spring element (34) being rotatably mounted with one end in a recess (84) about an axis of rotation and being held with another end in the direction of extension of the axis of rotation in a form-fitting manner by holding elements (92, 94, 96).

## Revendications

1. Robinet (1) pour la production et la séparation d'une liaison de fluide entre au moins deux parties de raccordement (2, 4),
comprenant au moins
un élément de liaison et de séparation (6) pour la production de la liaison de fluide et pour la séparation de la liaison de fluide,
dans lequel l'élément de liaison et de séparation (6) est réalisé au moins par sections de manière conique et
présente au moins une ouverture débouchante (8) pour la production de la liaison de fluide,
un élément d'actionnement manuel (10) pour la rotation de l'élément de liaison et de séparation (6),
dans lequel l'élément d'actionnement manuel (10) et l'élément de liaison et de séparation (6) sont couplés mécaniquement,
un corps principal (12),
dans lequel le corps principal (12) présente au moins une partie de raccordement (2) et un espace intérieur (14) pour la réception de l'élément de liaison et de séparation (6),
dans lequel l'espace intérieur (14) présente une surface de contact (16) pour la mise en contact avec l'élément de liaison et de séparation (6),
dans lequel la surface de contact (16) est réalisée au moins par sections de manière négative à la part de surface conique (28) de l'élément de liaison et de séparation (6),
dans lequel
au moins un élément de ressort (34) est prévu pour la fixation par complémentarité de formes de la position de l'élément de liaison et de séparation (6) par rapport au corps principal (12), dans lequel l'élément de ressort (34) est agencé dans ou au niveau du corps principal (12),
dans lequel l'élément de liaison et de séparation (6) présente dans son sens d'étendue axial (A) de manière contiguë à la section conique (22) avec le plus petit diamètre un prolongement (24),
dans lequel le prolongement (24) présente une paroi (40), en particulier une paroi inclinée par rapport au sens d'étendue axial, dans lequel l'au moins un élément de ressort (34) touche la paroi (40) pour la production d'une force de traction dans l'élément de liaison et de séparation (6),
dans lequel l'élément de ressort (34) présente au moins deux parts oblongues (50, 52), dans lequel les deux parts oblongues (50, 52) sont reliées entre elles par une part pliée (54),
dans lequel les deux parts oblongues (50, 52) sont réalisées comme deux parts de positionnement (56, 58) oblongues et touchent la paroi (40) pour la production d'une force de traction dans l'élément de liaison et de séparation (6),
**caractérisé en ce que**
l'élément de ressort (34) présente en outre au moins trois parts de retenue (60, 62, 74) oblongues,
dans lequel les parts de positionnement (56, 58) forment les extrémités (76, 78) de l'élément de ressort (34),
dans lequel chaque part de positionnement (56, 58) est reliée par le biais d'une part pliée (64, 66) à une part de retenue (60, 62),
dans lequel une part de retenue (74) oblongue centrale est reliée au moyen de deux parts (54, 55) pliées des deux côtés à respectivement une des autres parts de retenue (60, 62),
dans lequel les parts de retenue (60, 62, 74) sont couplées par le biais des éléments de retenue (92, 94, 96) par complémentarité de formes et/ou par friction au corps principal (12).

2. Robinet selon la revendication 1,
**caractérisé en ce que**
l'élément de ressort (34) est en outre prévu pour la production d'un pressage de surface et/ou pour la fixation des surfaces de contact entre la surface de contact (16) et la part de surface (28) conique de l'élément de liaison et de séparation (6).

3. Robinet selon la revendication 1 ou la revendication 2,
**caractérisé en ce que**
l'élément de liaison et de séparation (6) est mobile pour le démontage ou le montage par rapport à l'élément de ressort (34) dans son sens d'étendue axial (A).

4. Robinet selon la revendication 1,
**caractérisé en ce que**
l'élément de ressort (34) présente en outre au moins deux parts de retenue (60, 62) oblongues,
dans lequel les parts de retenue (60, 62) oblongues forment les extrémités (76, 78) de l'élément de ressort (34) et sont couplées par complémentarité de formes ou par friction au corps principal (12) et
dans lequel chaque part de positionnement (56, 58) est reliée par le biais d'une part pliée (64, 66) à une part de retenue (60, 62).

5. Robinet selon la revendication 4,
**caractérisé en ce que**
l'élément de ressort (34) réalise une forme de M, dans lequel l'angle d'enroulement du rayon de la part pliée (54) reliant les deux parts de positionnement (56, 58) est inférieur à l'angle d'enroulement du rayon d'une part pliée (64, 66) qui relie une part de retenue (60, 62) à une part de positionnement (56, 58).

6. Robinet selon la revendication 1,
**caractérisé en ce que**
la part pliée (54) présente des sections avec différents rayons, dans lequel une section principale (68) présente un rayon qui est supérieur aux rayons de deux sections accessoires (70, 72), dans lequel les parts de positionnement (56, 58) sont reliées par le biais des sections accessoires (70, 72) à la section principale (68).

7. Robinet selon la revendication 1,
**caractérisé en ce que**
les parts de retenue (60, 62, 74) reliées entre elles respectivement par le biais d'une part pliée (54, 55) sont orientées les unes par rapport aux autres dans un angle entre 70° et 110°, en particulier dans un angle de 90°.

8. Robinet selon la revendication 1,
**caractérisé en ce que**
deux éléments de ressort (34, 35) sont prévus.

9. Robinet selon la revendication 8,
**caractérisé en ce que**
chaque élément de ressort (34, 35) présente une part de retenue (60, 62) oblongue et une part de positionnement (56, 58) oblongue,
dans lequel la part de retenue (60, 62) et la part de positionnement (56, 58) sont reliées respectivement au moyen d'une part pliée (64, 66) entre elles,
dans lequel les parts de positionnement (56, 58) touchent la paroi (40) pour la production d'une force de traction dans l'élément de liaison et de séparation (6),
dans lequel les parts de retenue (60, 62) oblongues sont couplées par complémentarité de formes ou par friction au corps principal (12),
dans lequel les parts de positionnement (56, 58) coagissent respectivement avec une extrémité espacée de la part pliée (64, 66) par complémentarité de formes avec le corps principal (12) et
dans lequel une part de tenon (80, 82) se raccorde respectivement aux parts de retenue (60, 62), laquelle s'étend orthogonalement à un plan qui est défini par les parts de positionnement (56, 58) et les parts de retenue (60, 62), dans lequel chaque part de tenon (80, 82) est enfichée respectivement dans un évidement ou perçage (84, 88) dans le corps principal (12).

10. Robinet selon la revendication 1,
**caractérisé en ce que**
le corps principal (12) présente un guidage de ressort (99) pour la réception de l'élément de ressort (34), dans lequel l'élément de ressort (34) présente une section pliée, avec laquelle il est couplé au guidage de ressort (99), dans lequel la section pliée est une partie d'une part pliée qui entoure le corps principal (12) dans le sens circonférentiel au moins majoritairement et de préférence à plus de 270°, dans lequel la section pliée réalise d'une part une partie de fixation (100) qui est couplée au corps principal (12) ou au moyen de fixation (42) et d'autre part une autre part pliée se raccorde à la part pliée, dans lequel l'autre part pliée et la part pliée sont espacées par une part oblongue, en particulier droite l'une de l'autre et dans lequel l'autre part pliée et la part droite sont entourées par la part pliée au moins majoritairement.

11. Robinet selon la revendication 1,
**caractérisé en ce que**
l'élément de ressort (34) réalise une partie de fixation (100) s'étendant de manière oblongue, en particulier de manière droite qui est conçue pour l'introduction dans un évidement prévu à cet effet ou une zone de réception prévue à cet effet du corps principal (12), dans lequel une partie de transmission de force se raccorde à la partie de fixation (100), dans lequel l'élément de fixation est sollicité au moyen de la partie de transmission de force en direction de l'élément de liaison et de séparation (6) avec une force de pressage.

12. Robinet selon la revendication 1,
**caractérisé en ce que**
plusieurs moyens de fixation (42, 43) sont prévus,
dans lequel les moyens de fixation (42, 43) sont mobiles respectivement par le biais d'un guidage (90) réalisé dans le corps principal (12) dans le sens radial et sont pressés par l'élément de ressort (34) l'un vers l'autre.

13. Robinet selon l'une des revendications précédentes,
**caractérisé en ce que**
le robinet (1) est démontable sans destruction au moins dans les parties élément de liaison et de séparation (6), élément de ressort (34) et corps principal (12).

14. Robinet selon l'une des revendications précédentes,
**caractérisé en ce que**
l'élément de ressort (34) se compose d'une pièce de fil pliée.

15. Robinet selon l'une des revendications précédentes,
**caractérisé en ce que**
plusieurs éléments de ressort (34) de même construction, en particulier deux ou trois de même construction sont prévus.

16. Robinet selon la revendication 15,
**caractérisé en ce que**
au moins trois éléments de ressort (34) de même construction sont prévus, dans lequel chaque élément de ressort (34) est logé de manière à pouvoir tourner avec une extrémité dans un évidement (84) autour d'un axe de rotation et est maintenu avec une autre extrémité dans le sens d'étendue de l'axe de rotation par complémentarité de formes par des éléments de retenue (92, 94, 96).
